Europäisches Patentamt

European Patent Office

Office européen des brevets

Publication number: **0 285 255**
**A1**

## EUROPEAN PATENT APPLICATION

(21) Application number: 88301694.1

(22) Date of filing: 26.02.88

(51) Int. Cl.⁴: **B60T 11/16 , F16L 27/08**

(30) Priority: 07.03.87 GB 8705374

(43) Date of publication of application:
05.10.88 Bulletin 88/40

(84) Designated Contracting States:
DE ES FR GB IT

(71) Applicant: LUCAS INDUSTRIES public limited
company
Great King Street
Birmingham, B19 2XF West Midlands(GB)

(72) Inventor: Campbell, Roy
The Corner House 1, Marlbrook Lane
Lickey Rock Bromsgrove
Worcestershire(GB)
Inventor: Price, Anthony George
14, Meadow Lane Croesycieliog
Cwmbran Gwent NP44 2EY Wales(GB)

(74) Representative: Waite, Anthony William et al
MARKS & CLERK Alpha Tower Suffolk Street
Queensway
Birmingham B1 1TT(GB)

(54) Master Cylinder.

(57) A master cylinder (1) has a port connector (3) composed of two initially separate components (5) and (7). The component (5) lies internally of the cylinder and the component (7) is disposed externally with a spigot (16) extending through the end of the cylinder into snap-engagement with the component (5) to retain the connector in position. The component may be rotatable relative to the cylinder to permit the angular orientation of a pipe-receiving spigot (8) thereof to be varied.

FIG 1

EP 0 285 255 A1

## MASTER CYLINDER.

This invention relates to a master cylinder, primarily for use in a vehicle clutch or brake actuating system and generally comprising a pressure cylinder having a connector by means of which an external device may be connected to the cylinder. The invention is particularly concerned with the provision on the cylinder of a connector enabling the cylinder to be connected readily to a remote reservoir and has for an object to provide such a connector in simple and convenient form which may be inexpensively manufactured and which is more adaptable in use than some existing connectors.

According to the invention, a master cylinder includes a pressure cylinder having a port connector comprising two initially separate components, one of which lies within the cylinder in register with an opening through the cylinder wall and the other of which lies outside the cylinder and interconnects with said one component in such a manner as to retain said other component securely on the cylinder, the interconnected components forming a passageway between the interior and exterior of the cylinder and said other component being adapted to provide a connection with means disposed externally of the cylinder.

Preferably, the components are so interconnected that said other component is rotatable relative to the cylinder to permit the orientation of the connector relative to the cylinder to be varied.

Conveniently, the components are provided with formations such as to enable the components to be snap-engaged together to form said port connector.

Typically, said other component has a projection which extends through said opening to interconnect with said one component within the cylinder.

In an advantageous practical arrangement in which said other component is to form a connection with a source of low pressure fluid, such as a fluid reservoir, that part of the passageway in said one component forms a recuperation port in communication with said other component, said one component also preferably providing a valve seat around the recuperation port for co-operation with a valve element actuated by a pressure piston slidable in the cylinder.

The invention will now be described, by way of example with reference to the accompanying drawings, in which:-

Figure 1 is a fragmentary view, partly in cross-section, of part of one form of the master cylinder of the invention, and

Figure 2 is a view similar to Figure 1 of an alternative form of the master cylinder of the invention.

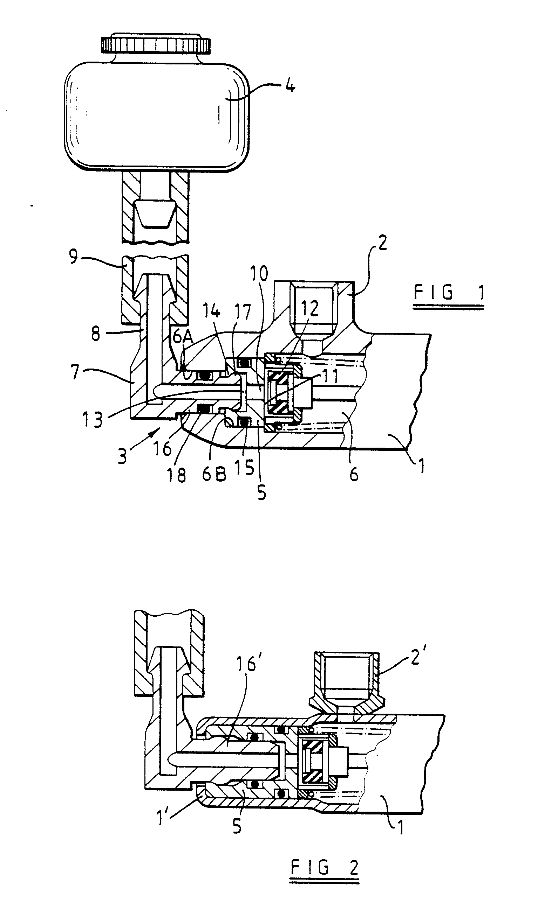

Referring to Figure 1 of the drawings, the master cylinder partially illustrated therein has a cast metal pressure cylinder 1 having a fluid outlet port connector 2 for connection of the cylinder to a vehicle braking system and through which fluid under pressure is supplied from the cylinder for actuation of the system.

A further port connector, indicated generally at 3, is provided on the cylinder and intended for connection to a remote external fluid reservoir 4. The connector 3 is composed of two initially separate components, namely an internal component 5 disposed within the bore 6 of the cylinder and an external component 7 extending outwardly of the cylinder and having a projecting spigot 8 for forming the aforesaid connection with the reservoir by way of a connecting pipe 9. Both of the components 5, 7 may conveniently be moulded from plastics material.

The internal connector component 5 is generally cylindrical and dimensioned to fit closely and preferably be a press-fit within a reduced diameter end portion 6A of the cylinder bore 6. The insert has a co-axial hole 10 therethrough, serving as a recuperation port and the axially innermost surface 11 of the insert forms a valve seat surrounding the port 10 for co-operation with a conventional centre valve element 12 actuated by movement of a piston (not shown) slidable within the cylinder. The valve element serves to control the flow of fluid from the reservoir into the cylinder, in known manner. The axially outermost surface of the component 5 has a recess 13 co-axial with the port 10 and the open end of the recess is surrounded by a radially inwardly extending lip 14. A seal 15 is interposed between the bore 6 and insert 5.

The external component 7 of the connector in this embodiment is generally L-shaped, with a spigot 16 extending generally at right-angles to the spigot 8, although any other appropriate relative angular orientation of the spigots may be chosen according to requirements. The spigot 16 has a peripheral rib 17 formed adjacent its inner end and the length of the spigot 16 is chosen to enable it to enter the recess 13 of the insert 5 and, in doing so, cause the rib 17 to snap-engage behind the lip 14 of the insert and thereby lock the two components together. The major part of the length of the spigot 16 is supported in a smaller diameter extension 6A of the bore 6 through which the spigot extends into engagement with the insert 5, and a further seal 18 is provided between the spigot and this smaller diameter bore extension 6A. Advantageously, the external component 7 may be movable angularly relative to the insert to enable the orientation of the spigot 8 relative to the cylinder to be varied, as required.

Figure 2 shows the invention applied to an alternative type of master cylinder in which the cylinder 1 is formed as a deep-drawn metal tube having an outlet port connection 2′ welded thereto. The left-hand end portion of the tube, as viewed in Figure 2, is narrowed slightly to receive the insert 5 closely therein, although the cylinder may be of uniform diameter and the diameter of the insert correspondingly increased to be closely received therein. The end of the tube is turned inwardly at 1′ to form a retaining abutment for the insert. The insert 5 is generally similar to that of Figure 1, but is of greater axial extent to receive substantially the entire length of the spigot 16′. The two components are provided with snap-engaging formations similar to and operating as described in relation to Figure 1.

The invention will be seen to provide a simple and convenient connector for a master cylinder which may be readily and inexpensively made and assembled and which may be more adaptable in use than some conventional connectors by virtue of the possibility of providing for angular movement between the two components. Although, as described, the internal component 5 is retained in position solely by its connection with the external component 7, and/or press fit in the cylinder, it would be possible to lock the component 5 positively in position within the cylinder axially and/or angularly by a locking member, such as a screw or pin extending through the cylinder wall into engagement with this component. It would also be possible to secure the assembled components together, either rigidly, or in a manner which permits the aforesaid relative rotation between the components. The port connector of the invention may be used with either a remote reservoir or one carried by the cylinder.

## Claims

1. A master cylinder including a pressure cylinder (1) having a port connector (3) characterised in that said connector comprises two initially separate components (5, 7), one (5) of which lies within the cylinder in register with an opening (6A) through the cylinder wall and the other (7) of which lies outside the cylinder and interconnects with said one component (5) in such a manner as to retain said other component securely on the cylinder, the interconnected components forming a passageway between the interior and exterior of the cylinder and said other component (7) being adapted to provide a connection with means (4) disposed externally of the cylinder (1).

2. A master cylinder according to Claim 1 characterised in that the components (5, 7) are so interconnected that said other component (7) is rotatable relative to the cylinder (1) to permit the orientation of the connector relative to the cylinder to be varied.

3. A master cylinder according to Claim 1 or Claim 2 characterised in that the components (5, 7) are provided with formations (14, 17) such as to enable the components to be interconnected by snap-engagement to form said port connector.

4. A master cylinder according to any one of the preceding claims characterised in that said other component (7) has a projection (16) which extends through said opening to interconnect with said one component (5) within the cylinder (1).

5. A master cylinder according to any one of the preceding claims characterised in that part of the passageway in said one component (5) forms a recuperation port (10) in communication with said other component (7), said one component (5) providing a valve seat (11) around said port for co-operation with a valve element (12) actuated by a pressure piston slidable in the cylinder (1).

6. A master cylinder according to any one of the preceding claims characterised in that said one component (5) engages an abutment surface within the cylinder (1).

7. A master cylinder according to Claim 5 characterised in that said one component (5) engages an abutment surface within the cylinder and is urged against that surface by a return spring for the pressure piston.

8. A master cylinder according to any one of the preceding claims characterised in that said one component (5) is a press fit within the cylinder (1).

9. A master cylinder according to Claim 5 characterised in that said one component (5) is housed within a reduced diameter portion (6B) of the cylinder and the shoulder formed at the reduction in diameter serves as an abutment for a pressure piston return spring.

FIG 1

FIG 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | GB-A-2 161 234 (PARAGON PLASTICS) <br> * figures 1-5 * <br> --- | 1-3 | B 60 T 11/16 <br> F 16 L 27/08 |
| A | DE-A-3 506 203 (KUGELFISCHER) <br> * figure 1 * <br> --- | 1 | |
| A | US-A-3 930 674 (JONSSON) <br> ----- | | |

TECHNICAL FIELDS SEARCHED (Int. Cl.4)

B 60 T 11/00
F 16 L 27/00

The present search report has been drawn up for all claims

| Place of search | Date of completion of the search | Examiner |
|---|---|---|
| BERLIN | 23-06-1988 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)